# FASCICULE DE BREVET EUROPEEN

(11) **EP 4 333 124 B1**
(45) Date de publication et mention de la délivrance du brevet: **04.06.2025**
(21) Numéro de dépôt: 23194424.0
(22) Date de dépôt: 31.08.2023
(51) Int. Cl.: H01M 4/60, H01M 4/04, H01M 4/13, H01M 4/139, H01M 10/0525, H01M 4/02, H01M 4/62, H01M 10/0568, H01M 10/0569

(54) **NOUVELLES ÉLECTRODES ORGANIQUES ET LEUR UTILISATION DANS DES SYSTÈMES ÉLECTROCHIMIQUES**
NEUE ORGANISCHE ELEKTRODEN UND DEREN VERWENDUNG IN ELEKTROCHEMISCHEN SYSTEMEN
NOVEL ORGANIC ELECTRODES AND THEIR USE IN ELECTROCHEMICAL SYSTEMS

(30) Priorité: 01.09.2022 FR 2208778
(43) Date de publication de la demande: 06.03.2024
(73) Titulaire: Electricité de France, 75008 Paris (FR); Centre National de la Recherche Scientifique, 75016 Paris (FR); Université de Picardie Jules Verne, 80025 Amiens Cedex 1 (FR)
(72) Inventeur: RUSSO, Roberto, 04100 LATINA (IT); STEVENS, Philippe, 77940 NOISY RUDIGNON (FR); TOUSSAINT, Gwenaëlle, 77140 NEMOURS (FR); BECUWE, Matthieu, 80370 BERNAVILLE (FR)
(74) Mandataire: Plasseraud IP

(56) Documents cités:
- EP-A1- 3 547 422
- CN-A- 105 702 950
- JP-A- S61 203 565

## Description

### Domaine technique

La présente invention se rapporte au domaine du stockage électrochimique d'énergie. En particulier elle vise la mise à disposition de nouvelles électrodes organiques et leur utilisation dans des systèmes électrochimiques, notamment dans une batterie rechargeable.

### Etat de la technique

Les batteries rechargeables sont des constituants indispensables dans de nombreux dispositifs, tels que les téléphones portables, les ordinateurs et les véhicules. Or, la grande majorité des batteries rechargeables sont constituées d'électrodes comprenant des matières minérales comme matière active. Ainsi, la plupart des électrodes positives contenues dans les batteries rechargeables sont des électrodes dites « inorganiques ». Ces électrodes comprennent, comme matière active redox réversible, des composés inorganiques, notamment des composés de métaux de transition tels que LiCoO₂, LiNiO₂, LiMn₂O₄, les composés mixtes comme le Li(Ni_{1/3}Co_{1/3}Mn_{1/3})O₂ , ou encore les composés à base de phosphate de Fer.

Ces électrodes à matière active inorganiques présentent toutefois des inconvénients majeurs. Hormis les problèmes de toxicité élevée et de risque de feu de ces batteries inorganiques, il existe des enjeux écologiques et économiques. En effet, ces composés inorganiques sont difficilement recyclables, et sont issus de ressources non-renouvelables, ce qui pose un problème potentiel d'approvisionnement, face à une demande croissante pour ce type de batteries. En outre, la production de la matière active inorganique utilisée dans une électrode positive des batteries est énergivore et source de production concomitante de gaz à effet de serre.

A la lumière de ces constats, des électrodes positives dépourvues de minéraux ont été envisagées par le passé. Ces électrodes positives dites « organiques » comprennent, comme matière actives, des éléments organiques disponibles en quantités plus abondantes tels que le carbone, l'hydrogène, l'oxygène, le soufre, le phosphore...

Ces composés redox organiques peuvent même être bio-sourcés à partir de plantes. Ces batteries présentent l'avantage d'avoir une emprunte carbone très faible, d'être produites à partir de ressources abondantes, et utilisant des procédés peu énergivores, opérant à basse température. La nature organique de la matière active rend, en outre, ces batteries plus faciles à recycler, voire en partie biodégradables.

Cependant, ces composés redox organiques nécessitent souvent d'être immobilisés au sein de l'électrode, afin d'apporter une composante conducteur électronique et d'éviter, notamment, leur dissolution dans l'électrolyte. Ainsi, des électrodes ont été développées, ayant comme matière active un composé organique redox immobilisé sur du carbone, ou encore greffé sur un polymère. Ces solutions ne sont cependant pas satisfaisantes, car le taux de composés redox est faible, dû à la présence d'une charge de conducteur électronique ou d'un polymère pour les stabiliser.

Des électrodes à base de petites molécules organiques non-polymériques, ont également été développées. Ainsi, le brevet JPS6315703 B2 décrit une batterie lithium organique comprenant une électrode positive comprenant un dérivé de phénanthrène, dont par exemple le 9,10-phénanthrènequinone, comme matière active. Une batterie comprenant cette électrode présente une bonne capacité de décharge, mais la réversibilité des réactions d'oxydoréduction est insuffisante et la tension de décharge moyenne est relativement faible (i.e. de l'ordre de 2 - 2,5 volts).

Par ailleurs, pour la plupart des batteries organiques à base de petites molécules non-polymériques, il est observé que la capacité spécifique (définie comme la charge électrique que la batterie peut fournir d'un état complètement chargé jusqu'à sa décharge complète, par unité de masse) chute après plusieurs cycles de charge-décharge, signe d'une mauvaise stabilité au cyclage. Aussi, ces électrodes souffrent d'une autodécharge importante.

De plus, la faible conductivité électronique et ionique des matières actives organiques connues de l'état de l'art impose généralement l'ajout d'une quantité importante de conducteur électronique qui ne contribue pas à la réaction redox de stockage/déstockage d'électricité. Ce conducteur électronique peut représenter jusqu'à 70% de la masse de l'électrode, hors poids du collecteur. La porosité de l'électrode doit également être ajustée pour permettre à suffisamment d'électrolyte de pénétrer pour assurer la percolation ionique dans l'électrode, ce qui a un impact sur la quantité de matière active maximale par unité de surface du collecteur de l'électrode.

Il existe donc un besoin de fournir de nouvelles électrodes, dépourvues de minéraux, et ayant des propriétés électrochimiques compatibles avec une utilisation dans une batterie, notamment rechargeable.

Il est en particulier souhaitable de disposer d'une batterie organique ayant une bonne tension de décharge (en particulier supérieure à 4 V), une bonne capacité spécifique, ainsi qu'une bonne stabilité au cyclage afin de permettre suffisamment de cycles de charge-décharge.

Les documents JP S61 203565 A et EP 3 547 422 A1 décrivent des compositions d'électrode positive pour batteries rechargeables, comprenant une matière active organique telle que le thianthrène ou la 1,4,8,11-tétrahydroxydibenzo[b,i]thianthrène-5,7,12,14-tétrone.

Le document CN 105 702 950 A concerne l'utilisation de thianthrène et de ses dérivés en tant qu'additif pour un électrolyte au sein d'une batterie de type lithium-ion.

Il est du mérite des inventeurs d'avoir mis au point une électrode positive à matière active organique répondant à ces besoins.

**Un premier objet** de la présente invention est une électrode positive à matière active organique comprenant, de préférence constituée de :
- une matière active organique,
- un matériau conducteur électronique, et
- un collecteur de courant,
dans laquelle la matière active est un composé redox de Formule 1 : 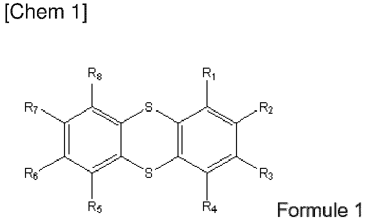 dans laquelle :
R₁, R₂, R₃, R₄, R₅, R₆, R₇ et R₈ sont indépendamment choisis parmi :
   - un atome d'hydrogène,
   - un halogène, en particulier choisi parmi le fluor, le chlore et le brome, notamment un fluor,
ou un groupement choisi parmi :
   - alkyle en C₁ à C₅₀, linéaire ou ramifié,
   - fluoroalkyle en C₁ à C₅₀, linéaire ou ramifié, notamment -CF₃,
   - -CO₂H, éventuellement sous une forme salifiée,
   - -SO₂OH, éventuellement sous une forme salifiée,
   - -PO(OH)₂, éventuellement sous une forme salifiée,
   - -PO(ORₐ)₂, dans lequel Rₐ est un groupement alkyle C₁ à C₁₀, linéaire ou ramifié, notamment CH₃,
   - -CN,
   - amine,
   - -OH,
   - -OR_{b}, dans lequel R_{b} est un groupement alkyle en C₁ à C₅₀, linéaire ou ramifié,
   - -CHO,
   - -CO-R_{c}, dans lequel R_{c} est un groupement alkyle en C₁ à C₅₀, linéaire ou ramifié,
et dans laquelle :
   - soit R₁, R₂, R₃, R₄, R₅, R₆, R₇ et R₈ sont différents de H,
   - soit R₁, R₄, R₅, et R₈ sont H, et R₂, R₃, R₆ et R₇ sont différents de H,
   - soit R₁, R₃, R₄, R₅, R₇ et R₈ sont H, et R₂ et R₆ sont différents de H.

Par « *alkyle linéaire en C₁ à C₅₀ »* il faut entendre : une chaîne alkyle linéaire de 1 à 50 atomes de carbone. Par « C₁ à C₅₀ » on entend notamment les gammes suivantes : C₁ à C₂₀, C₁ à C₂₀, C₁ à C₁₀ et C₁ à C₅. Le groupement alkyle linéaire est notamment un groupement méthyle, éthyle, propyle, butyle, pentyle, en particulier un groupement méthyle.

Par « *alkyle ramifié »,* il faut comprendre un groupe alkyle tel que défini ci-dessus comprenant des substituants choisis parmi la liste des groupes alkyles linéaires définies ci-dessus, lesdits groupes alkyles linéaires étant également susceptibles d'être ramifiés. Parmi les groupements alkyl ramifiés on peut notamment citer un groupement tert-butyle, sec-butyle et isopropyle.

Par « *fluoroalkyle en C₁ à C₅₀* »*,* il faut comprendre un groupe alkyle en C₁ à C₅₀ tel que défini ci-dessus comprenant un ou plusieurs atomes de fluor à la place des atomes d'hydrogène. Le groupement fluoroalkyle est notamment un groupement CF₃.

Le groupement -CO₂H, ou acide carboxylique, peut éventuellement être sous la forme d'un groupement carboxylate, notamment sous la forme de sel métallique tel qu'un sel de sodium, un sel de potassium ou un sel de lithium. Un sel organique est également possible, tel qu'un sel d'ammonium, par exemple.

Le groupement -SO₂OH, ou acide sulfonique, peut éventuellement être sous la forme d'un groupement sulfonate, notamment sous la forme de sel métallique tel qu'un sel de sodium, un sel de potassium ou un sel de lithium. Un sel organique est également possible, tel qu'un sel d'ammonium, par exemple.

Le groupement -PO(OH)₂, ou acide phosphonique, peut éventuellement être sous la forme d'un groupement phosphonate, notamment sous la forme de sel métallique tel qu'un sel de sodium, un sel de potassium ou un sel de lithium. Un sel organique est également possible, tel qu'un sel d'ammonium, par exemple.

Par groupement « amine » il faut entendre une amine primaire (-NH₂), une amine secondaire de formule -NH(R_{d}), une amine tertiaire de formule -N(R_{d})(Rₑ), ou une amine quaternaire de formule - N⁺(R_{d})(Rₑ)(R_{f})X⁻.

R_{d}, Rₑ et R_{f} étant indépendamment l'un de l'autre choisis parmi un groupement alkyle C₁ à C₅₀, linéaire ou ramifié, notamment CH₃, ou un groupement aryle, notamment phényle.

X⁻ dans ledit groupement -N⁺(R_{d})(Rₑ)(R_{f})X⁻ est notamment un contre-ion choisi parmi hydroxyle, bromure, chlorure ou iodure, ou alors un contre-ion organique, comme par exemple acétate.

Ladite amine primaire, amine secondaire ou amine tertiaire étant éventuellement sous la forme d'un sel d'ammonium, dont le contre ion est notamment choisi parmi hydroxyle, bromure, chlorure ou iodure, ou alors un contre ion organique, comme par exemple acétate.

L'électrode positive selon l'invention comprend, comme **matière active organique,** un composé redox (oxydo-réducteur) de Formule 1. Le composé redox de Formule 1 correspond à une molécule de thianthrène, substituée sur des positions spécifiques.

Classiquement, les composés à base de thianthrène sont capables d'échanger, lors d'une réaction redox, et ce de manière réversible, un électron avec insertion d'un contre-anion A⁻. Dans le cadre d'une batterie dans laquelle une électrode positive à base de thianthrène est contenue, l'anion A⁻ provient de l'électrolyte, dans lequel un sel comprenant ledit anion A⁻ est présent (Schéma 1).

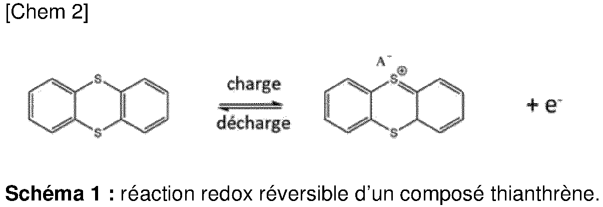

La présence de substituants spécifiques dans le composé redox de Formule 1 selon l'invention permet d'ajuster le potentiel rédox de la molécule, et dans le cas le plus avantageux d'effectuer l'échange de 2 électrons, séquentiellement, avec insertion de deux anions A⁻ (Schéma 2). Par rapport à un processus à un électron observé pour le thianthrène non-substitué, ce processus redox à deux électrons permet de stocker deux fois plus de charge (puisque le double d'électrons peuvent être échangés), quand l'électrode est utilisée au sein d'une batterie, ce qui présente un avantage évident.

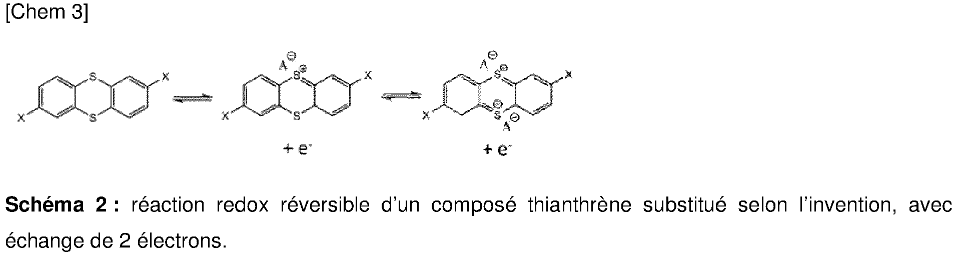

En outre, et sans être liée par la théorie, la présence de substituants particuliers, en positions spécifiques sur le motif thianthrène conduit à une matière active, au sein de l'électrode positive, ayant une structure cristalline particulière qui diffère de la structure cristalline obtenue pour le cas d'une molécule de thianthrène non-substitué.

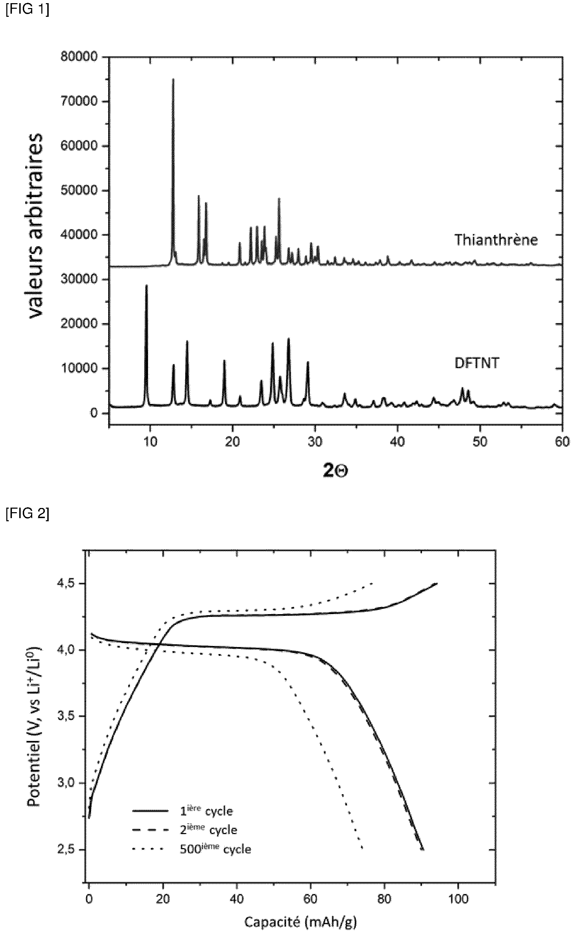

A titre d'illustration, la [Fig 1] montre une comparaison du diffractogramme, mesuré par diffractométrie de rayons X sur poudres (DRX), du thianthrène non-substitué par rapport au 2,7-difluorothianthrène (DFTNT) selon l'invention. La structure cristalline particulière obtenue grâce à la présence de substituants en positions spécifiques sur le cycle thianthrène, facilite le transport d'ions et d'électrons au sein de l'électrode, ce qui permet d'obtenir des puissances plus élevées.

En outre, la présence, au sein de l'électrode positive selon l'invention, d'une matière active, d'un matériau conducteur électronique et éventuellement d'un liant confère à l'électrode une structure poreuse qui permet à l'électrolyte de pénétrer l'électrode permettant ainsi à l'électrolyte d'être en contact avec la matière active.

Selon un mode de réalisation particulier, l'invention concerne une électrode positive telle que définie ci-dessus, dans laquelle le composé de Formule 1 est tel que R₁, R₂, R₃, R₄, R₅, R₆, R₇ et R₈ sont indépendamment choisis parmi :
- un atome d'hydrogène,
- un halogène,
ou un groupement choisi parmi :
- alkyle en C₁ à C₁₀, linéaire ou ramifié,
- fluoroalkyle en C₁ à C₁₀, linéaire ou ramifié.

Selon un mode de réalisation particulier, la présente invention concerne une électrode positive telle que définie ci-dessus, dans laquelle le composé de Formule 1 correspond à la Formule 2 suivante : 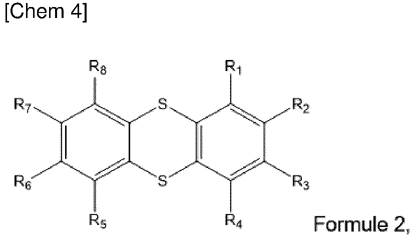 dans laquelle R₁, R₂, R₃, R₄, R₅, R₆, R₇ et R₈ sont tels que définies ci-dessus pour la Formule 1, mais sont tous différents de H.

Selon ce mode de réalisation, le thianthrène est substitué sur toutes les positions par un groupement autre que H. Les groupements R₁, R₂, R₃, R₄, R₅, R₆, R₇ et R₈ sont notamment identiques et sont en particulier -CH₃ ou F.

Selon un mode de réalisation particulier, la présente invention concerne une électrode positive telle que définie ci-dessus, dans laquelle le composé de Formule 1 correspond à la Formule 3 suivante : 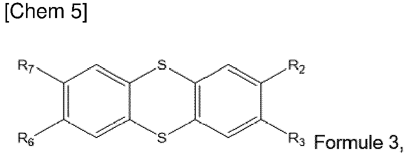 dans laquelle R₂, R₃, R₆ et R₇ sont tels que définies ci-dessus pour la Formule 1, mais sont tous différents de H.

Selon ce mode de réalisation, le thianthrène est substitué sur les positions 2, 3, 7 et 8 (nomenclature IUPAC) par un groupement autre que H. Les groupements R₂, R₃, R₆ et R₇ sont notamment identiques et sont en particulier -CH₃ ou F.

Selon un mode de réalisation particulier, la présente invention concerne une électrode positive telle que définie ci-dessus, dans laquelle le composé de Formule 1 correspond à la Formule 4 suivante : 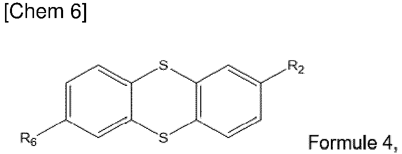 dans laquelle R₂ et R₆ sont tels que définies ci-dessus pour la Formule 1, mais sont tous différents de H.

Selon ce mode de réalisation, le thianthrène est substitué sur les positions 2 et 7 (nomenclature IUPAC) par un groupement autre que H. Les groupements R₂ et R₆ sont notamment identiques et sont en particulier -CH₃ ou F.

Selon un autre mode de réalisation particulier, l'invention concerne une électrode positive telle que définie ci-dessus, dans laquelle le composé de Formule 1 est choisi parmi :

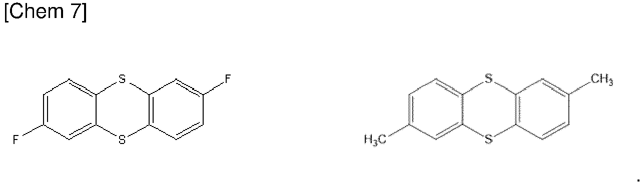

Selon un autre mode de réalisation particulier, l'invention concerne une électrode positive telle que définie ci-dessus, dans laquelle le composé redox de Formule 1 est présent dans l'électrode positive en une teneur allant de 20 à 80 % en poids, de préférence de 50 à 75% en poids, plus préférentiellement de 60 à 70% en poids, par rapport au poids total de l'électrode positive, hors collecteur de courant.

Par « *poids total de l'électrode positive, hors collecteur de courant »* on entend le poids total de la matière active, du matériau conducteur électronique et du liant éventuel.

En-dessous de 20%, l'électrode ne comprend pas suffisamment de composé redox pour pouvoir stocker suffisamment d'électricité, notamment pour une utilisation dans une batterie.

Au-dessus de 80% l'électrode positive ne peut pas comprendre suffisamment de matériau conducteur électronique et éventuellement de liant.

Par une teneur en composé redox de Formule 1 allant de « 20 à 80% » on entend également les gammes suivantes : « 20 à 60%, « 20 à 40% », « 40 à 80% », « 50 à 80% » « 60 à 80% », « 70 à 80% », « 40 à 75% » « 50 à 75%, « 60 à 70% » et « 40 à 60% ».

L'électrode positive à matière organique selon l'invention comprend en outre un matériau conducteur électronique.

Comme **matériau conducteur électronique,** on peut utiliser toute matière conductrice habituellement utilisée dans une électrode positive.

Selon un autre mode de réalisation particulier, le matériau conducteur électronique est choisi parmi le noir de carbone, le noir d'acétylène, le graphite, les nanotubes de carbone, les fibres de carbone, les polymères organiques conducteurs, le matériau conducteur électronique étant notamment du noir de carbone.

A titre d'exemple de noir de carbone, on peut citer les noirs de carbone commercialisés sous les références : Ketjenblack 600JD^{®}, Ketjenblack 7003D^{®} et Timcal Ensaco 350G^{®}.

Parmi les polymères organiques conducteurs on peut citer, à titre d'exemple, le poly(3,4-éthylènedioxythiophène) (PEDOT), les poly(phosphoester-urethanes) (PPU) ou le polyaniline (PANI).

Parmi les nanoparticules on entend notamment des nanoparticules métalliques telles que les nanoparticules de cuivre ou d'argent.

En particulier, le matériau conducteur électronique est présent dans l'électrode positive en une teneur allant de 10 à 60 % en poids, notamment de 20 à 40% en poids, de préférence de 25 à 30% en poids, par rapport au poids total de l'électrode positive, hors collecteur de courant.

En-dessous de 10%, la percolation électronique n'est pas assurée et les réactions électrochimiques au sein de l'électrode ne pourront pas avoir lieu ou seulement dans une partie de l'électrode.

Au-dessus de 60%, son poids devient prépondérant et diminue fortement la densité d'énergie de batterie fabriqué avec cette électrode.

Par une teneur en matériau conducteur électronique allant de « 10 à 60% » on entend également les gammes suivantes : « 10 à 50%, « 10 à 40% », « 10 à 30% », de « 10 à 20% », « 25 à 30% », « 30 à 60% », « 40 à 60% », « 50 à 60% » et « 30 à 50% », notamment « 25 à 30% ».

L'électrode à matière active organique selon l'invention comprend également un collecteur de courant, par exemple sous la forme d'une feuille métallique, notamment une feuille d'aluminium ou de cuivre.

Selon un mode de réalisation préféré de l'invention, l'électrode positive peut comprendre un liant.

Le **liant** sert à assurer une bonne cohésion de l'électrode. Dans l'électrode selon l'invention, tout liant habituellement utilisé dans une électrode positive peut être inclus.

Selon un mode de réalisation particulier, la présente invention concerne une électrode positive à matière active organique tel que définie ci-dessus, comprenant, de préférence constituée de :
- une matière active organique,
- un matériau conducteur électronique,
- un collecteur de courant, et
- éventuellement un liant.

Selon un autre mode de réalisation particulier, l'invention concerne une électrode positive telle que définie ci-dessus, dans laquelle l'électrode comprend un liant, en particulier un liant choisi parmi les polyvinylidènes, les polyéthylènes, les polyacrylates, les liants alkydes, les liants glycérophtaliques, les polysiloxanes, les polysiloxane-époxydes, les polyuréthanes, les polysaccharides, les latex, la carboxyméthylcellulose et ses dérivés, le polyfluorure de vinylidène et le polytétrafluoroéthylène.

Par « *dérivés de carboxyméthylcellulose »* on entend des carboxyalkylcelluloses qui comprennent, à la place du méthyle, un groupement alkyl, autre que méthyl, comme par exemple un groupement éthyle, propyle ou butyle.

Selon un mode préféré de réalisation, le liant est notamment choisi parmi la carboxyméthylcellulose et le polyfluorure de vinylidène.

Selon un autre mode de réalisation particulier, le liant est présent dans l'électrode positive en une teneur allant de 5 à 25 % en poids, de préférence en une teneur allant de 10 à 15% en poids, par rapport au poids total de l'électrode positive, hors collecteur de courant.

En-dessous de 5%, l'électrode risque de s'effriter / se désintégrer.

Au-dessus de 25%, le liant pourrait avoir des effets isolants, réduisant la conductivité électronique. De plus, le liant n'étant pas électroactif, la présence de trop de liant réduit la quantité d'énergie qui peut être stockée.

Par une teneur en liant allant de « 5 à 25% » on entend également les gammes suivantes : « 5 à 20%, « 5 à 10% », « 10 à 25% » et « 15 à 25% », notamment « 10 à 15% ».

**Un deuxième objet** de la présente invention est un procédé de préparation d'une électrode positive telle que définie ci-dessus, dans lequel le procédé comprend :
1. la mise en contact de ladite matière active, dudit matériau conducteur électronique, et éventuellement dudit liant, pour obtenir une encre d'électrode,
2. le coulage de ladite encre d'électrode sur un collecteur de courant,
3. le séchage de ladite encre d'électrode sur le collecteur de courant.

L'étape 1 de mise en contact de la matière active, du matériau conducteur électronique, et éventuellement du liant est typiquement mise en œuvre par la préparation d'un mélange physique des deux, ou trois, constituants et un liquide, suivie d'une homogénéisation du mélange, par exemple à l'aide d'un broyeur ou d'un mixeur pour obtenir une encre.

Le liquide est notamment un solvant organique tel que par exemple la N-méthyl-2-pyrrolidone (NMP). L'utilisation d'un solvant organique facilite le séchage l'électrode à l'issu de l'étape 3.

Par « *encre »* on entend au sens de la présente invention une pâte d'électrode destinée à être étalée sur un collecteur de courant.

L'étape 2 de coulage peut être effectuée à l'aide d'un système de raclage (*doctor-blade* en anglais), habituellement utilisé à cet effet et consiste à étaler l'encre sur la surface d'un collecteur de courant.

L'étape 3 de séchage permet d'évaporer le solvant utilisé dans l'étape 1.

L'électrode peut ensuite être poinçonnée. A titre d'exemple, le poinçonnage peut être effectué à l'aide d'une poinçonneuse à électrodes. L'étape de poinçonnage sert à obtenir la forme physique et la taille souhaitées de l'électrode.

Les inventeurs ont observé de façon surprenante que l'électrode positive selon l'invention montre d'excellentes propriétés électrochimiques, permettant leur utilisation dans une batterie. Ainsi, des propriétés électrochimiques comparable à celles observées pour des électrodes à base de minéraux ont été observées.

De plus, les électrodes présentent une bonne recyclabilité, et peuvent être utilisées à plus de 100 cycles, notamment à plus de 500 cycles sans perte d'activité électrochimique.

L'électrode positive selon l'invention permet d'atteindre **un potentiel redox** supérieur à 3,7 V *versus* Li⁺/Li⁰, avec l'électrolyte LP30, en particulier supérieure à 4 V. L'électrolyte LP30 est un électrolyte commercialement disponible (Merck), constitué de LiPF₆ 1M dans un mélange carbonate d'éthylène / carbonate de diméthyle 1/1.

Ainsi, une électrode positive comprenant du 2,7-difluorothianthrène permet d'atteindre un potentiel redox moyen de 4,15 V vs Li⁺/Li⁰ (au sein d'une demi-cellule de type Swagelok avec l'électrolyte LP30).

En comparaison, une électrode positive à base de thianthrene non-substitué montre un potentiel redox moyen de 3,95 V vs Li⁺/Li⁰, dans les mêmes conditions.

Selon un mode de réalisation particulier, la présente invention concerne donc une électrode positive telle que définie ci-dessus, présentant un potentiel redox moyen comprise de 3,7 V à 4,2 V, *versus* Li⁺/Li⁰ avec l'électrolyte LP30.

Le potentiel redox, ou potentiel d'oxydoréduction désigne, dans le cadre des composés selon l'invention, la propension des composés à perdre un électron.

Le potentiel rédox E⁰ est exprimé en Volt (V) et est mesuré par rapport à une électrode de référence, Li⁺/Li⁰ dans l'invention. La mesure du potentiel rédox peut être effectuée dans une cellule de référence, de type Swagelok par exemple.

L'électrode positive selon l'invention permet d'atteindre **une capacité spécifique** supérieure à 90 mAh g⁻¹ de matière active, après une première charge au régime C/5, *versus* Li⁺/Li⁰ avec l'électrolyte LP30.

En outre les électrodes positives organiques selon l'invention montrent une excellente **cinétique redox.** Par exemple, l'utilisation d'une électrode positive comprenant du 2,7-difluorothianthrène permet d'atteindre une capacité spécifique de 96 mAh g⁻¹, 84 mAh g⁻¹, 79 mAh g⁻¹, 70 mAh g⁻¹ et 14 mAh g⁻¹ pour un régime C/5, C/2, 1C, 2C et 4C, respectivement ; tandis que le thianthrène non-substitué offre des capacités de 69 mAh g⁻¹, 51 mAh g⁻¹, 39 mAh g⁻¹, 20 mAh g⁻¹ et 0 mAh g⁻¹ pour les mêmes taux régime C.

Par « régime C » il est entendu le temps en heure pour charger ou décharge complètement l'électrode. Ainsi, un régime C/5 correspond à une charge/décharge complète en 5 h.

Selon un mode de réalisation particulier, la présente invention concerne donc une électrode positive telle que définie ci-dessus, présentant une capacité spécifique comprise de 90 mAh g⁻¹ à 130 mAh g⁻¹, *versus* Li⁺/Li⁰ avec l'électrolyte LP30, au premier cycle de charge-décharge et à un régime C/5.

La capacité spécifique, exprimée en mAh/g, représente la charge électrique que la batterie peut fournir d'un état complètement chargé jusqu'à sa décharge complète, par unité de masse. La mesure de la capacité spécifique peut être effectuée dans une cellule de référence, de type Swagelok par exemple. Dans le cadre de l'invention, ces valeurs sont mesurées *versus* Li⁺/Li⁰ avec l'électrolyte LP30.

**Un troisième objet** de la présente invention est une batterie, notamment rechargeable, comprenant une électrode positive telle que définie ci-dessus, une électrode négative et un électrolyte non-aqueux.

Comme « *électrode négative »* on peut, à titre d'exemple, utiliser **une électrode à matière active inorganique,** e.g. une électrode métallique (lithium ou sodium), en graphite, en carbone, en silicium (ou un mélange silicium/graphite), en titane de lithium (La₂TiO₃ ou Li₄TiO₁₂, par exemple), ou **une électrode à matière active organique,** *e.g*. à base de groupements carboxylate tel que le dilithium téréphtalate, le dilithium 2,6-naphthalene dicarboxylate, le dilithium anthracene dicarboxylate, ou à base de groupement diazo, ou à base de groupements nitrile, tel que le tetracyanobenzoquinone.

Une électrode négative inorganique est notamment une électrode à base de Lithium métallique.

Une électrode négative organique est notamment une électrode à base de dilithium 2,6-naphthalene dicarboxylate.

Le choix de l'électrode négative, organique ou inorganique, dépend du type de batterie souhaité.

Par « *électrolyte non-aqueux »* on entend au sens de la présente invention un électrolyte constitué d'un liquide non aqueux.

L'utilisation d'un liquide non-aqueux permet d'éviter d'éventuelles réactions non-désirables avec les composés présents dans l'électrode négative, tel que le lithium métallique.

Selon un mode de réalisation particulier, le liquide non-aqueux est un solvant aprotique, en particulier un solvant choisi parmi un carbonate organique, un éther, un ester, un nitrile ou un mélange de ces solvants.

Selon un mode de réalisation particulier, le liquide non-aqueux est choisi parmi : du carbonate d'éthylène (EC), du carbonate de propylène (PC), du carbonate de vinylène (VC), du carbonate de butylène (BC), du carbonate de diméthyle (DMC), du carbonate de diéthyle (DEC), du carbonate d'éthylméthyle (CEM), du carbonate d'éthylène vinylique (VEC), de l'éther diméthylique, du diglyme, du triglyme, ou des combinaisons de ceux-ci.

Le liquide non-aqueux est notamment un mélange de carbonate d'éthylène et de carbonate de diméthyle.

Selon un mode de réalisation préféré, le liquide non-aqueux comprend un sel solubilisé. En particulier, le sel compris dans le solvant non-aqueux est un sel comprenant un cation métallique et un anion A⁻. La présence de l'anion A⁻ permet l'échange d'électrons avec insertions de l'anion A⁻, tel qu'illustré dans les schémas 1 et 2 ci-dessus.

Le cation métallique est notamment un cation Mⁿ⁺, dans lequel n vaut 1 ou 2 et M est un métal. Le cation métallique est en particulier choisi parmi le Li⁺, le Na⁺, le K⁺, le Ca²⁺ et le Mg²⁺, de préférence Li⁺.

L'anion est notamment un anion A^{m-} dans lequel m vaut 1 ou 2. L'anion est notamment choisi parmi le PF₆⁻, le BF₄⁻, le ClO₄⁻, le (CF₃SO₂)₂N⁻ et le (FSO₂)₂N⁻, de préférence PF₆⁻.

Le sel est en particulier choisi parmi : LiBr, Lil, LiSCN, LiBF₄, LiAlF₄, LiPF₆, LiAsF₆, LiClO₄, Li₂SO₄, LiB(Ph)₄, LiAlO₂, Li[N(FSO₂)₂], Li[SO₃CH₃], Li[BF₃(C₂F₅)], Li[PF₃(CF₂CF₃)₃], Li[B(C₂O₄)₂], Li[B(C₂O₄)F₂], Li[PF₄(C₂O₄)], Li[PF₂(C₂O₄)₂], Li[CF₃CO₂], Li[C₂F₅CO₂], Li[N(CF₃SO₂)₂], Li[C(SO₂CF₃)₃], Li[N(C₂F₅SO₂)₂], Li[CF₃SO₃], ou un lithium alkyl fluorophosphate.

Selon un mode préféré de réalisation, le sel est du LiPF₆, qui donne les meilleurs rendements.

Selon un mode de réalisation particulier, la concentration dudit sel contenu dans l'électrolyte est compris de 1M à 5M, en particulier compris de 1M à 2M.

Selon un mode de réalisation particulier, l'invention concerne une batterie telle que définie ci-dessus, dans laquelle l'électrolyte non-aqueux est une solution d'un sel dans un solvant organique,
- le sel étant choisi parmi LiPF₆, LiClO₄, et Li[N(FSO₂)₂], le sel étant notamment du LiPF₆,
- le solvant organique étant un solvant à base de carbonate, notamment du carbonate de diéthyle, du carbonate d'éthylène, du carbonate de propylène, du carbonate de diméthyle ou un mélange de ces solvants.

Hormis l'électrode positive, l'électrode négative et l'électrolyte, la batterie selon l'invention peut être équipée d'autres composants éventuellement nécessaires au fonctionnement d'une batterie.

Ainsi, la batterie peut éventuellement équipée d'un séparateur, positionné entre l'électrode positive et l'anode.

Comme exemples non limitatifs de matériaux séparateurs utilisables dans la batterie, on peut citer :
- les membranes échangeuses d'ions de type NAFION (copolymères à base de tétrafluoroéthylène sulfoné),
- les matériaux à base de polymères poreux tels que, par exemple, les poly(éther-éther-cétones) sulfonés, les polysulfones, le polyéthylène, le polypropylène, les copolymères éthylène-propylène, les polyimides, les polyvinyldifluorures,
- les céramiques poreuses,
- les métaux isolés poreux,
- les verres conducteurs de cations,
- les zéolithes.

Le séparateur peut par exemple prendre la forme d'une membrane, d'un gel matriciel, d'une feuille.

Selon un mode de réalisation particulier, le séparateur est un séparateur en fibre de verre.

La batterie selon l'invention est notamment une batterie rechargeable (aussi appelé « accumulateur »), et en particulier une batterie type lithium, dans laquelle l'électrode négative est une électrode métallique à base de lithium.

La présente invention concerne notamment une batterie telle que définie ci-dessus, présentant un **rendement coulombique** supérieur à 80%, notamment supérieur à 90%, en particulier supérieur à 95%.

Le rendement coulombique, ou efficacité de coulomb, correspond au rapport de la quantité d'électricité produite (en phase décharge) et la quantité d'électricité stocké (en phase charge), au premier cycle.

La présente invention concerne notamment une batterie telle que définie ci-dessus, présentant une **stabilité au recyclage** telle que le rendement coulombique après 500 cycles est supérieur à 60%, notamment supérieur à 70 ou supérieur à 80%, par rapport au premier cycle.

Les exemples et figures ci-dessous servent à illustrer l'invention sans en limiter la portée.
**[****FIG 1****]** représente le diffractogramme mesuré par diffractométrie de rayons X sur poudres (DRX) pour le thianthrène et le 2,7-difluorothianthrène (DFTNT).
**[****FIG 2****]** représente le profil potentiel-capacité des 1^{re}, 2^{ème} et 500^{ème} cycles de la demi-cellule Li utilisant une électrode 2,7-difluorothianthrène, exemple 4 (LiPF₆ 1M dans EC/DMC 1:1, plage de fenêtres 4,5 à 2,5 V).
**[****FIG 3****]** représente la variation de la capacité en fonction du nombre de cycles pour la demi-cellule décrite dans l'exemple 4 (2,7-difluorothianthrène).
**[****FIG 4****]** représente le profil potentiel-capacité des 1^{re}, 2^{ème} et 300^{ème} cycles de la demi-cellule Li utilisant une électrode 2,7-diméthylthianthrène, exemple 5 (LiPF₆ 1M dans EC/DMC 1:1, plage de fenêtres 4,5 à 2,5 V).
**[****FIG 5****]** représente la variation de la capacité en fonction du nombre de cycles pour la demi-cellule décrite dans l'exemple 5 (2,7-diméthylthianthrène).
**[****FIG 6****]** représente le profil potentiel-capacité des 1^{re}, 2^{ème} et 100^{ème} cycles de cellules organiques complètes utilisant le 2,7-difluorothianthrène comme électrode positive et le dicarboxylate de dilithium 2,6-naphtalène, comme spécifié dans l'exemple 7. (LiPF₆ 1M dans EC/DMC 1:1, plage de fenêtres 4,5 à 2,5 V).
**[****FIG 7****]** représente variation de la capacité en fonction du nombre de cycles pour la cellule complète décrite dans l'exemple 7.
**[****FIG 8****]** représente le profil potentiel-capacité des 1^{re}, 2^{ème} et 500^{ème} cycles de la demi-cellule Li utilisant une électrode thianthrène non substitué, exemple 6 (LiPF₆ 1M dans EC/DMC 1:1, plage de fenêtres 4,5 à 2,5 V).
**[****FIG 9****]** représente la variation de la capacité en fonction du nombre de cycles pour la demi-cellule décrite dans l'exemple 6 (thianthrène non substitué).
**[****FIG 10****]** représente les résultats d'un test de capacité de débit effectué à C/5, C/2, C, 2C et 4C à l'aide d'une demi-cellule à base de thianthrène non substitué, par rapport au lithium.
**[****FIG 11****]** représente les résultats d'un test de capacité de débit effectué à C/5, C/2, C, 2C et 4C à l'aide d'une demi-cellule à base de 2,6-difluorothianthrène, par rapport au lithium.

### Exemples

### Exemple 1 Synthèse du 2,7-difluorothianthrène (DFTNT)

Le 2,7-difluorothianthrène a été synthétisé selon la procédure décrite par Edson et al (J. Polym. Sci. Part A: Polym. Chem., 2004, 42, 6353-6363).

Du 4-fluorobenzènethiol (5,06 mL, 6,09 g, 27 mmol) a été pesé et transféré dans un ballon de 100 ml. De l'acide sulfurique (70 mL, 20-30% d'oléum) a été ajouté lentement pour conduire à une solution bleue, progressivement devenue violette. La solution a été agitée à l'aide un barreau aimanté pendant 22 heures à température ambiante. Ensuite, 200 mL d'eau glacée ont été ajoutées à la solution, ce qui a conduit à la formation d'un précipité brun. La suspension a été filtrée sous vide, puis le précipité a été lavé successivement avec de l'eau, de l'acétone et de l'éther diéthylique. Le produit brut a été dissous dans 100 mL d'acide acétique bouillant, puis 2,68 g (41 mmol) de poussière de zinc ont été transférés dans la solution. La solution a été chauffé au reflux pendant 18 h, puis l'excès de zinc a été éliminé par filtration. Le filtrat a été versé dans 200 mL d'eau, puis la suspension ainsi formée a été filtrée. Le solide a été lavé avec de l'eau et séché sous vide pendant 8 heures à 80°C pour donner un solide cristallin brun clair.
Rendement : 68%.
¹H-NMR (DMSO-d6) : 7,62 (m, 2H), 7,54 (m, 2H), 7,27-7,22 (m, 2H).
¹³C-NMR (DMSO-d6) : 162,63, 138,37, 130,37, 130,05, 116,26, 115,33.

### Exemple 2 Synthèse du 2,7-diméthyl thianthrène (DMTNT)

Du 4-méthylbenzènethiol (3,35 g, 27 mol) a été pesé et transféré ballon de 250 ml. De l'acide sulfurique (40 mL, 20-30% d'oléum) a été ajouté lentement pour conduire à une solution bleue, progressivement devenue violette. La solution a été agitée à l'aide un barreau aimanté pendant 22 heures à température ambiante. Ensuite, 200 mL d'eau glacée ont été ajoutées à la solution, formant un précipité brun. Le produit a été filtré sous vide, puis le précipité a été lavé à l'eau, à l'acétone et à l'éther diéthylique. Ensuite, le solide a été séché sous vide pendant 8 heures à 80° C pour donner un solide jaune et cristallin.
Rendement: 41%.
¹H-NMR (DMSO-d6, 400 MHz) 7,31 (d, 1H), 7,26 (d, 1H), 6,99 (dd, 1H), 2,28 (s, 3H).
¹³C-NMR (CDCl₃, 400 MHz) 137,7, 135,9, 129,3, 128,5, 128,4, 0,9, 1.3.

### Exemple 3 Production des électrodes positives

### Procédure générale :

L'électrode positive a été préparée en mélangeant 1 g de matière active avec 0,41 g de carbone conducteur (Ketjenblack^{®} 600) et 0,21 g de liant (carboxyméthylcellulose). Le tout a été mélangé dans un mortier, puis à l'aide d'un homogénéisateur Ultra-Turrax^{®} (IKA, Allemagne) pendant 30 minutes à 6000 tr/min. Puis, 6 mL de n-méthyl pyrrolidone (NMP) ont été ajoutées et l'ensemble a été mélangé pendant 90 minutes. Après l'étape de mélange, la pâte a été coulée sur une feuille d'aluminium (épaisseur 20 µm) à l'aide d'un système de raclage (350 µm d'espace) puis le solvant a été évaporé sur une plaque chauffante pendant 2 heures à 60°C.

Les électrodes rondes ont été poinçonnées à 13 mm de diamètre et séchées pendant 18 heures à 70 °C sous vide.

La charge massique a été quantifiée d'environ 2,5 mg cm⁻².

Ainsi, 3 électrodes positives ont été préparées selon ce mode de fabrication :

**[Table 1]**

| **Electrode positive** | **Composé redox** |
|---|---|
| **1** - selon l'invention | 2,7-difluorothianthrène |
| **2** - selon l'invention | 2,7-diméthylthianthrène |
| **3** - électrode comparative | Thianthrène |

### Exemple 4 Essai électrochimique avec l'électrode positive 1 selon l'invention

Les performances électrochimiques de l'électrode positive **1,** comprenant le composé redox 2,7-difluorothianthrène, ont été déterminées à l'aide d'une cellule de type Swagelok^{®}, assemblée dans une boîte à gants remplie d'argon (H₂O<0,1 ppm, O₂<0,1 ppm).

Le séparateur en fibre de verre (Whatman^{®}) a été imbibé d'une solution LiPF₆ de 1M dans un mélange carbonate d'éthylène (EC): carbonate de diméthyle (DMC) à 50:50% en poids (électrolyte LP30, Merck) comme électrolyte.

La cellule a été testée en mode galvanostatique à l'aide d'un instrument Biologic VMP-3 (Biologic SAS, France) avec une fenêtre de tension 2,5 à 4,5 V à un régime 2C.

La demi-cellule a montré un potentiel redox moyen de 4,15 V vs Li⁺/Li⁰, avec l'électrolyte LP30, et une capacité spécifique de 94 mAh g⁻¹ après la phase de charge. Une capacité réversible de 90 mAh g⁻¹ a été observée, avec un rendement coulombique globale de 96% (Figure 2).

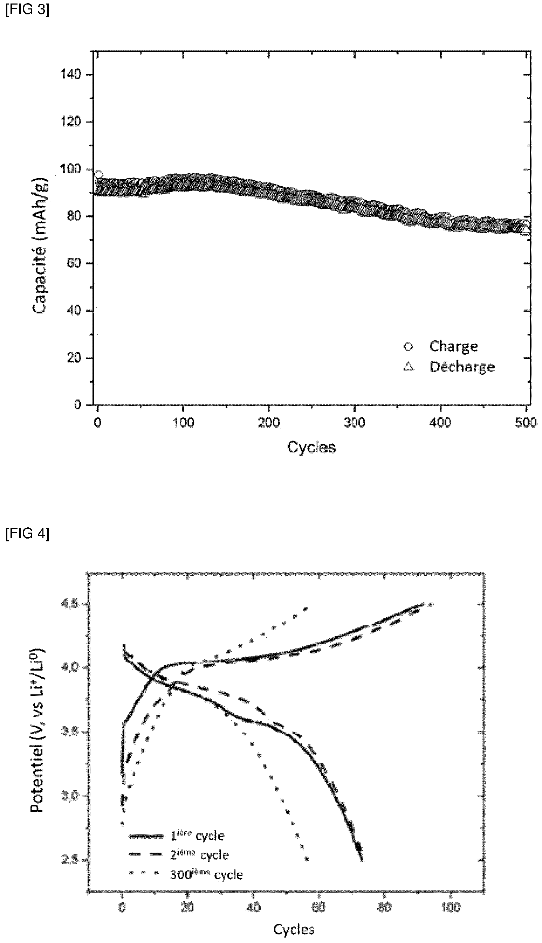

Après 500 cycles, une capacité réversible spécifique de 73 mAh g⁻¹ a été observée (rétention de capacité de 80% par rapport au premier cycle). Le rendement coulombique (*coulombic efficiency* en anglais) a été quantifié à 97% (Figure 3).

En ce qui concerne les performances en fonction du régime (*rate performance* en anglais), une capacité spécifique de 96 mAh g⁻¹, 84 mAh g⁻¹, 79 mAh g⁻¹, 70 mAh g⁻¹ et 14 mAh g⁻¹ pour des régimes C/5, C/2, C, 2C et 4C a été mesurée, respectivement.

### Exemple 5 Essai électrochimique avec l'électrode positive 2 selon l'invention

Les performances électrochimiques de l'électrode positive **2,** comprenant le composé redox 2,7-diméthylthianthrène, ont été déterminées en utilisant cellule de type Swagelok^{®}, assemblée dans une boîte à gants remplie d'argon (H₂O<0,1 ppm, O₂<0,1 ppm).

Le séparateur en fibre de verre (Whatman^{®}) a été imbibé d'une solution LiPF₆ de 1M dans un mélange carbonate d'éthylène (EC):carbonate de diméthyle (DMC) à 50:50% en poids (électrolyte LP30, Merck) comme électrolyte.

La cellule a été testée en mode galvanostatique à l'aide d'un instrument Biologic VMP-3 (Biologic SAS, France) avec une fenêtre de tension 2,5 à 4,5 V à un régime 2C.

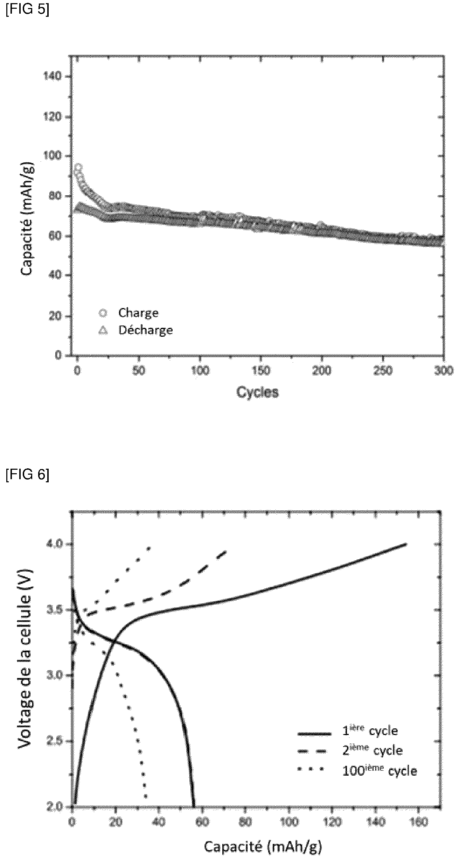

La demi-cellule a montré un potentiel redox moyen de 3,80 V *vs.* Li⁺/Li⁰, avec l'électrolyte LP30, avec une capacité spécifique de 92 mAh g⁻¹ après la phase de charge. Une capacité réversible de 73 mAh g⁻¹ a été observée, pour un rendement coulombique global de 96 % (Figure 4). Après 300 cycles, une capacité réversible spécifique 56 mAh g⁻¹ a été observée (charge de 58 mAh g⁻¹), pour une rétention de capacité de 77% par rapport au premier cycle et un rendement coulombique de 97% (Figure 5).

### Exemple 6 Essai électrochimique avec l'électrode positive 3 - exemple comparatif

Les performances électrochimiques du composite d'électrodes de thianthrène non substitué, ont été déterminées à l'aide d'une cellule de type Swagelok^{®}, assemblée dans une boîte à gants remplie d'argon (H₂O<0,1 ppm, O₂<0,1 ppm).

Le séparateur en fibre de verre (Whatman^{®}) a été imbibé d'une solution LiPF₆ de 1M dans un mélange carbonate d'éthylène (EC):carbonate de diméthyle (DMC) à 50:50% en poids (électrolyte LP30, Merck) comme électrolyte.

La cellule a été testée en mode galvanostatique à l'aide d'un instrument Biologic VMP-3 (Biologic SAS, France) avec une fenêtre de tension 2,5 à 4,5 V à un régime C/5.

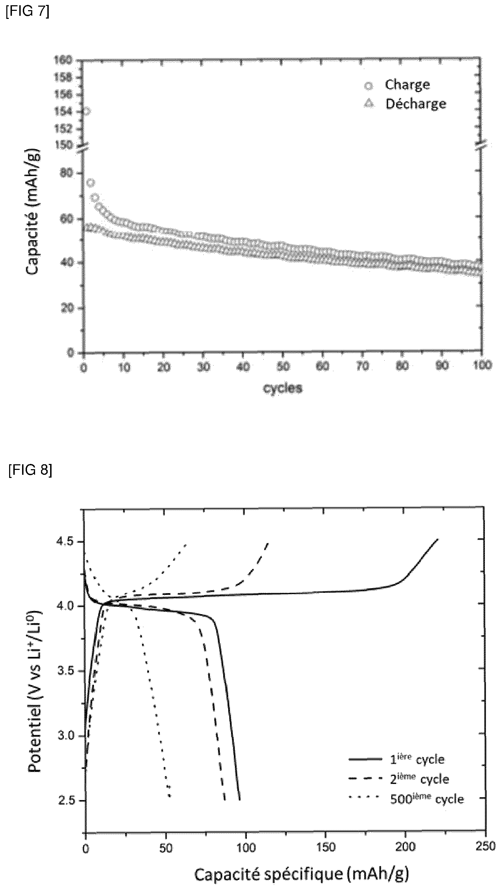

La demi-cellule a montré un potentiel redox moyen de 3,95 V *versus* Li⁺/Li⁰, avec l'électrolyte LP30, avec une capacité spécifique de 221 mAh g⁻¹ après la phase de charge. Une capacité réversible de 96 mAh g⁻¹ a été observée, pour un rendement coulombique globale de 43% (Figure 8).

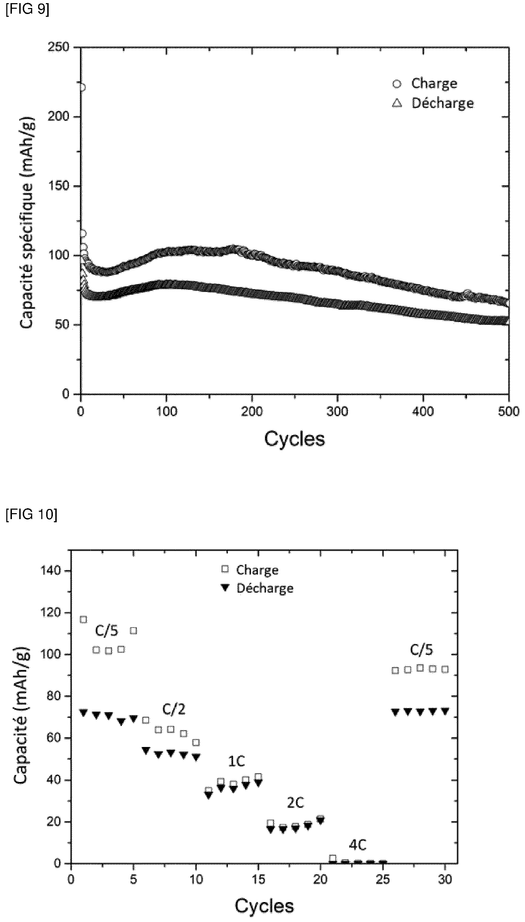

Après 500 cycles, une capacité réversible spécifique de 52 mAh g⁻¹ a été observée (pour une rétention de capacité de 54% par rapport au premier cycle). Le rendement coulombique a été quantifié à 80% (Figure 9). En ce qui concerne la performance du taux, une capacité spécifique de 69 mAh g⁻¹, 51 mAh g⁻¹, 39 mAh g⁻¹ et 20 mAh g⁻¹ pour un régime C/5, C/2, C et 2C a été mesurée, respectivement ; à un régime de 4C, la demi-cellule n'est pas en mesure de fournir de la capacité.

### Exemple 7 Test électrochimique d'une cellule organique complète composée du composé 1 et Li₂NDC

Une cellule organique complète, basée sur un mécanisme à deux ions, a été préparée et assemblée. L'électrode à base de 2,7-difluorothianthrène a été préparée comme décrit dans l'exemple 3. L'électrode négative a été préparée en utilisant du dicarboxylate de dilithium 2,6-naphtalène (Li₂NDC) comme matériau actif.

Le dicarboxylate de dilithium 2,6-naphtalène a été synthétisé selon la méthode décrite par Ogihara (Angew. Chem. Int. Ed. Engl., 2014, 53(43), p. 11467-11472).

1 g de matière active a été mélangé avec 0,38 g de carbone conducteur (TIMCAL SUPER C45) et 0,15 g de liant (carboxyméthylcellulose), pour une proportion finale de 65/25/15 %massique. Ensuite, 5 ml d'eau ont été ajoutés et la pâte a été mélangée pendant 90 minutes supplémentaires. La pâte a été coulée sur une feuille de cuivre et séchée à 60 °C pendant 4 heures.

L'électrode a été poinçonnée à 13 mm de diamètre et séchée pendant la nuit à 100 °C sous vide.

La charge massique a été quantifiée d'environ de 4,0 mg cm⁻². Les essais électrochimiques ont été effectués à l'aide d'une cellule de type pile à pièces, assemblée dans une boîte à gants remplie d'argon (H₂O<0,1 ppm, O₂<0,1 ppm). Les deux électrodes organiques ont été séparées par un séparateur en fibre de verre (Whatman^{®}) qui a été imbibé d'une solution LiPF₆ de 1M dans un mélange carbonate d'éthylène (EC) : carbonate de diméthyle (DMC) à 50:50% en poids (électrolyte LP30, Merck) comme électrolyte.

La cellule a été testée en mode galvanostatique à l'aide d'un instrument Biologic VMP-3 (Biologic SAS, France) avec une fenêtre de tension 4,0 - 2,0 V un régime 1C. Comme l'illustre la Figure 6, les qualités de performance de cette batterie bi-ions, c'est-à-dire la batterie dans laquelle les anions participent à l'oxydation positive des électrodes, tandis que les cations prennent part à la réduction négative des électrodes pour contrebalancer la charge pendant les cycles charge/décharge, sont effectivement confirmées.

La cellule organique complète a montré un potentiel redox moyen de 3,40 V vs Li⁺/Li⁰, avec une capacité spécifique de 154 mAh g⁻¹ après la phase de charge, avec une capacité réversible de 56 mAh g⁻¹, pour un rendement coulombique globale de 36% (Figure 6).

Après 100 cycles, une capacité réversible spécifique de 35 mAh g⁻¹ a été observée (37 charges), pour une rétention de capacité de 63% par rapport au premier cycle. Le rendement coulombique a été quantifiée à 95 % (Figure 7).

### Discussion

Les exemples ci-dessus montrent que la présence de substituants sur le cycle thianthrène conduit à une augmentation du potentiel d'insertion moyen, ou potentiel redox. Dans le cas du thianthrène non substitué, un potentiel d'insertion de 3,95 V par rapport au Li⁺/Li⁰ est observé (exemple 6). En revanche un potentiel d'insertion de 4,15 V par rapport au Li⁺/Li⁰ est observé en présence des deux atomes de fluor (2,7-difluorothianthrène, exemple 4).

En outre, le 2,7-difluorothianthrène a également montré une meilleure cinétique redox, ce qui peut être vu à partir des différentes performances de vitesse obtenues avec les deux matériaux.

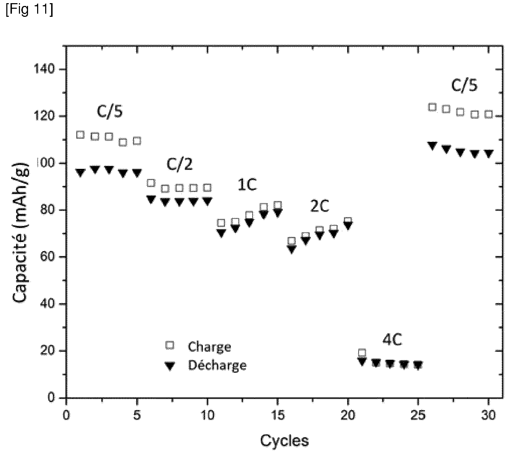

Ainsi, la Figure 10 et la Figure 11 représentent les capacités spécifiques en fonction de la densité de courant appliquée pour les électrodes de thianthrène et de 2,7-difluorothianthrène, respectivement.

Le dérivé de 2,7-difluorothianthrène présente une capacité spécifique de 96 mAh g⁻¹, 84 mAh g⁻¹, 79 mAh g⁻¹, 70 mAh g-1 et 14 mAh g⁻¹ à un régime C/5, C/2, 1C, 2C et 4C, respectivement ; tandis que le thianthrène non substitué offre des capacités de 69 mAh g⁻¹, 51 mAh g⁻¹, 39 mAh g⁻¹, 20 mAh g⁻¹ et 0 mAh g⁻¹ pour les mêmes régimes respectivement.

Par conséquent, l'électrode à base de 2,7-difluorothianthrène est caractérisée par une cinétique redox supérieure à une électrode à base de thianthrène non-substitué. Ce résultat peut être expliqué par une meilleure conductivité ionique/électronique de la structure cristalline du thianthrène substitué par rapport à celle du thianthrène non substitué. Les différences de structure ont été mises en évidence par la comparaison des modèles de diffraction des deux matériaux, illustrés dans la Figure 1.

## Revendications

1. Electrode positive à matière active organique comprenant, de préférence constituée de :
• une matière active organique,
• un matériau conducteur électronique, et
• un collecteur de courant,
dans laquelle la matière active est un composé redox de Formule 1 : 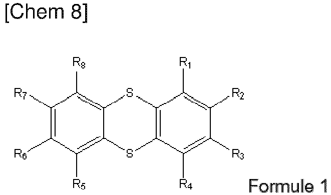
dans laquelle :
R₁, R₂, R₃, R₄, R₅, R₆, R₇ et R₈ sont indépendamment choisis parmi :
• un atome d'hydrogène,
• un halogène, en particulier choisi parmi le fluor, le chlore et le brome, notamment un fluor,
ou un groupement choisi parmi :
• alkyle en C₁ à C₅₀, linéaire ou ramifié,
• fluoroalkyle en C₁ à C₅₀, linéaire ou ramifié, notamment -CF₃,
• -CO₂H, éventuellement sous une forme salifiée,
• -SO₂OH, éventuellement sous une forme salifiée,
• -PO(OH)₂, éventuellement sous une forme salifiée,
• -PO(ORₐ)₂, dans lequel Rₐ est un groupement alkyle C₁ à C₁₀, linéaire ou ramifié, notamment CH₃,
• -CN,
• amine,
• -OH,
• -OR_{b}, dans lequel R_{b} est un groupement alkyle en C₁ à C₅₀, linéaire ou ramifié,
• -CHO,
• -CO-R_{c}, dans lequel R₈ est un groupement alkyle en C₁ à C₅₀, linéaire ou ramifié,
et dans laquelle :
• soit R₁, R₂, R₃, R₄, R₅, R₆, R₇ et R₈ sont différents de H, ou
• soit R₁, R₄, R₅, et R₈ sont H, et R₂, R₃, R₆ et R₇ sont différents de H, ou
• soit R₁, R₃, R₄, R₅, R₇ et R₈ sont H, et R₂ et R₆ sont différents de H.

2. Electrode positive selon la revendication 1, dans laquelle le composé de Formule 1 est tel que R₁, R₂, R₃, R₄, R₅, R₆, R₇ et R₈ sont indépendamment choisis parmi :
• un atome d'hydrogène,
• un halogène,
ou un groupement choisi parmi :
• alkyle en C₁ à C₁₀, linéaire ou ramifié,
• fluoroalkyle en C₁ à C₁₀, linéaire ou ramifié, notamment -CF₃.

3. Electrode positive selon l'une des revendication 1 ou 2, dans laquelle le composé de Formule 1 est choisi parmi :

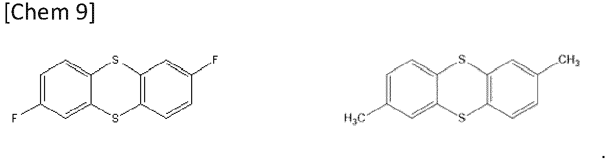

4. Electrode positive selon l'une des revendications 1 à 3, dans laquelle le composé redox de Formule 1 est présent dans l'électrode positive en une teneur allant de 20 à 80 % en poids, de préférence de 50 à 75% en poids, plus préférentiellement de 60 à 70% en poids, par rapport au poids total de l'électrode positive, hors collecteur de courant.

5. Electrode positive selon l'une des revendications 1 à 4, dans laquelle le matériau conducteur électronique est choisi parmi le noir de carbone, le noir d'acétylène, le graphite, les nanotubes de carbone, les fibres de carbone, les polymères organiques conducteurs, le matériau conducteur électronique étant notamment du noir de carbone.

6. Electrode positive selon l'une des revendications 1 à 5, dans laquelle le matériau conducteur électronique est présente dans l'électrode positive en une teneur allant de 10 à 60 %, notamment de 20 à 40% en poids, de préférence de 25 à 30% en poids, par rapport au poids total de l'électrode positive, hors collecteur de courant.

7. Electrode positive selon l'une des revendications 1 à 6, dans laquelle l'électrode comprend un liant, en particulier un liant choisi parmi les polyvinylidènes, les polyéthylènes, les polyacrylates, les liants alkides, les liants glycérophtaliques, les polysiloxanes, les polysiloxane-époxydes, les polyuréthanes, les polysaccharides, les latex, la carboxyméthylcellulose et ses dérivés, le polyfluorure de vinylidène et le polytétrafluoroéthylène.

8. Electrode positive selon la revendication 7, dans laquelle le liant est présent dans l'électrode positive en une teneur allant de 5 à 25 % en poids, de préférence en une teneur allant de 10 à 15% en poids, par rapport au poids total de l'électrode positive, hors collecteur de courant.

9. Procédé de préparation d'une électrode positive selon l'une des revendications 1 à 8, dans lequel le procédé comprend :
1. la mise en contact de ladite matière active, dudit matériau conducteur électronique, et éventuellement dudit liant, pour obtenir une encre d'électrode,
2. le coulage de ladite encre d'électrode sur un collecteur de courant,
3. le séchage de ladite encre d'électrode sur le collecteur de courant.

10. Batterie, notamment rechargeable, comprenant une électrode positive selon l'une des revendications 1 à 8, une électrode négative et un électrolyte non-aqueux.

11. Batterie selon la revendication 10, dans laquelle l'électrolyte non-aqueux est une solution d'un sel dans un solvant organique,
• le sel étant choisi parmi LiPF₆, LiClO₄, et Li[N(FSO₂)₂], le sel étant notamment du LiPF₆,
• le solvant organique étant un solvant à base de carbonate, notamment du carbonate de diéthyle, du carbonate d'éthylène, du carbonate de propylène, du carbonate de diméthyle ou un mélange de ces solvants.

## Patentansprüche

1. Positive Elektrode mit organischem aktiven Material, die bevorzugt besteht aus:
• einem organischen aktiven Material,
• einem elektronisch leitenden Material, und
• einem Stromabnehmer,
wobei das aktive Material eine Redoxverbindung der Formel 1 ist: 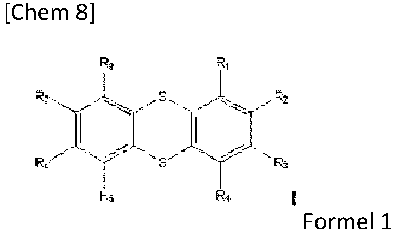
wobei:
R₁, R₂, R₃, R₄, R₅, R₆, R₇ und R₈ unabhängig voneinander gewählt sind aus:
• einem Wasserstoffatom,
• einem Halogen, insbesondere gewählt aus Fluor, Chlor und Brom, insbesondere Fluor,
oder einer Gruppe, gewählt aus:
• linearem oder verzweigtem C₁- bis C₅₀-Alkyl,
• linearem oder verzweigtem C₁- bis C₅₀-Fluoralkyl, insbesondere -CF₃,
• -CO₂H, gegebenenfalls in Salzform,
• -SO₂H, gegebenenfalls in Salzform,
• -PO(OH)₂, gegebenenfalls in Salzform,
• -PO(ORₐ)₂, wobei Rₐ eine lineare oder verzweigte C₁- bis C₁₀-Alkylgruppe, insbesondere CH₃, ist,
• -CN,
• Amin,
• -OH,
• -OR_{b}, wobei R_{b} eine lineare oder verzweigte C₁- bis C₅₀-Alkylgruppe ist,
• -CHO,
• -CO-R_{c}, wobei R_{c} eine lineare oder verzweigte C₁- bis C₅₀-Alkylgruppe ist,
und wobei:
• entweder R₁, R₂, R₃, R₄, R₅, R₆, R₇ und R₈ von H verschieden sind, oder
• entweder R₁, R₄, R₈ und R₈ H sind und R₂, R₃, R₆ und R₇ von H verschieden sind, oder
• entweder R₁, R₃, R₄, R₅, R₇ und R₈ H sind und R₂ und R₆ von H verschieden sind.

2. Positive Elektrode nach Anspruch 1, wobei die Verbindung der Formel 1 so ist, dass R₁, R₂, R₃, R₄, R₅, R₆, R₇ und R₈ unabhängig gewählt sind aus:
• einem Wasserstoffatom,
• einem Halogen
oder einer Gruppe, gewählt aus:
• linearem oder verzweigtem C₁ bis C₁₀-Alkyl
• linearem oder verzweigtem C₁ bis C₁₀-Fluoralkyl, insbesondere -CF₃.

3. Positive Elektrode nach einem der Ansprüche 1 oder 2, wobei die Verbindung der Formel 1 gewählt ist aus:

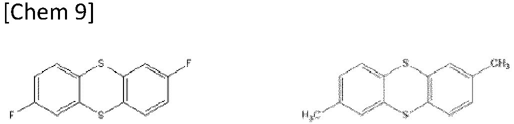

4. Positive Elektrode nach einem der Ansprüche 1 bis 3, wobei die Redoxverbindung der Formel 1 in der positiven Elektrode mit einem Gehalt von 20 bis 80 Gew.-%, bevorzugt von 50 bis 75 Gew.-%, stärker bevorzugt von 60 bis 70 Gew.-%, bezogen auf das Gesamtgewicht der positiven Elektrode ohne Stromabnehmer, vorliegt.

5. Positive Elektrode nach einem der Ansprüche 1 bis 4, wobei das elektronisch leitfähige Material gewählt ist aus Ruß, Acetylenruß, Graphit, Kohlenstoffnanoröhren, Kohlenstofffasern, leitfähigen organischen Polymeren, wobei das elektronisch leitfähige Material insbesondere Ruß ist.

6. Positive Elektrode nach einem der Ansprüche 1 bis 5, wobei das elektronisch leitfähige Material in der positiven Elektrode mit einem Gehalt von 10 bis 60 %, insbesondere 20 bis 40 Gew.-%, bevorzugt 25 bis 30 Gew.-%, bezogen auf das Gesamtgewicht der positiven Elektrode, ohne Stromabnehmer, vorliegt.

7. Positive Elektrode nach einem der Ansprüche 1 bis 6, wobei die Elektrode ein Bindemittel umfasst, insbesondere ein Bindemittel, das gewählt ist aus Polyvinyliden, Polyethylenen, Polyacrylaten, Alkydbindemitteln, Glycerophthalbindemitteln, Polysiloxanen, Polysiloxanepoxiden, Polyurethanen, Polysacchariden, Latex, Carboxymethylcellulose und deren Derivate, Polyvinylidenfluorid und Polytetrafluorethylen.

8. Positive Elektrode nach Anspruch 7, wobei das Bindemittel in der positiven Elektrode mit einem Gehalt von 5 bis 25 Gew.-%, bevorzugt mit einem Gehalt von 10 bis 15 Gew.-%, bezogen auf das Gesamtgewicht der positiven Elektrode ohne Stromabnehmer, vorhanden ist.

9. Verfahren zur Herstellung einer positiven Elektrode nach einem der Ansprüche 1 bis 8, wobei das Verfahren umfasst:
1. Inkontaktbringen des aktiven Materials, des elektronisch leitenden Materials und gegebenenfalls des Bindemittels, um eine Elektrodentinte zu erhalten,
2. Gießen der Elektrodentinte auf einen Stromabnehmer,
3. Trocknen der Elektrodentinte auf dem Stromabnehmer.

10. Batterie, insbesondere wiederaufladbare Batterie, mit einer positiven Elektrode nach einem der Ansprüche 1 bis 8, einer negativen Elektrode und einem nichtwässrigen Elektrolyten.

11. Batterie nach Anspruch 10, wobei der nichtwässrige Elektrolyt eine Lösung eines Salzes in einem organischen Lösungsmittel ist,
• wobei das Salz aus LiPF₆, LiClO₄ und Li[N(SO₂)₂] gewählt ist, wobei das Salz insbesondere LiPF₆ ist,
• wobei das organische Lösungsmittel ein Lösungsmittel auf Carbonatbasis ist, insbesondere Diethylcarbonat, Ethylencarbonat, Propylencarbonat, Dimethylcarbonat oder ein Gemisch dieser Lösungsmittel.

## Claims

1. Positive electrode based on organic active material, comprising, preferably consisting of:
• an organic active material,
• an electronically conductive material, and
• a current collector,
wherein the active material is a redox compound of Formula 1: 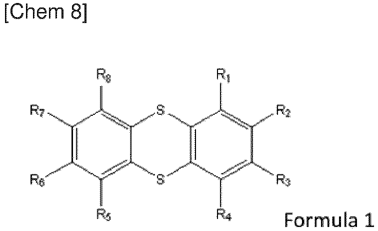
wherein:
R₁, R₂, R₃, R₄, R₅, R₆, R₇ and R₈ are independently selected among:
• a hydrogen atom,
• a halogen, in particular selected among fluorine, chlorine, and bromine, in particular a fluorine,
or a group selected among:
• C₁ to C₅₀ linear or branched alkyl,
• C₁ to C₅₀ linear or branched fluoroalkyl, in particular -CF₃,
• -CO₂H, optionally in salified form,
• -SO₂OH, optionally in salified form,
• -PO(OH)₂, optionally in salified form,
• -PO(ORₐ)₂, where Rₐ is a C₁ to C₁₀ linear or branched alkyl group, in particular CH₃,
• -CN,
• amine,
• -OH,
• -OR_{b}, where R_{b} is a C₁ to C₅₀ linear or branched alkyl group,
• -CHO,
• -CO-R_{c}, where R₈ is a C₁ to C₅₀ linear or branched alkyl group,
and wherein:
• R₁, R₂, R₃, R₄, R₅, R₆, R₇ and R₈ are different from H, or
• R₁, R₄, R₅, and R₈ are H, and R₂, R₃, R₆ and R₇ are different from H, or
• R₁, R₃, R₄, R₅, R₇ and R₈ are H, and R₂ and R₆ are different from H.

2. Positive electrode according to claim 1, wherein the compound of Formula 1 is such that R₁, R₂, R₃, R₄, R₅, R₆, R₇, and R₈ are selected independently among:
• a hydrogen atom,
• a halogen,
or a group selected among:
• C₁ to C₁₀ linear or branched alkyl,
• C₁ to C₁₀ linear or branched fluoroalkyl, in particular -CF₃.

3. Positive electrode according to one of claims 1 or 2, wherein the compound of Formula 1 is selected among:

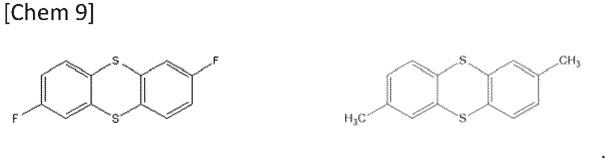

4. Positive electrode according to one of claims 1 to 3, wherein the redox compound of Formula 1 is present in the positive electrode in a content ranging from 20 to 80% by weight, preferably from 50 to 75% by weight, more preferably from 60 to 70% by weight, relative to the total weight of the positive electrode excluding the current collector.

5. Positive electrode according to one of claims 1 to 4, wherein the electronically conductive material is selected among carbon black, acetylene black, graphite, carbon nanotubes, carbon fibers, and conductive organic polymers, the electronically conductive material being in particular carbon black.

6. Positive electrode according to one of claims 1 to 5, wherein the electronically conductive material is present in the positive electrode in a content ranging from 10 to 60%, in particular from 20 to 40% by weight, preferably from 25 at 30% by weight, relative to the total weight of the positive electrode excluding the current collector.

7. Positive electrode according to one of claims 1 to 6, wherein the electrode comprises a binder, in particular a binder selected among polyvinylidenes, polyethylenes, polyacrylates, alkide binders, glycerophtalic binders, polysiloxanes, polysiloxane-epoxides, polyurethanes, polysaccharides, latexes, carboxymethylcellulose and its derivatives, polyvinylidene fluoride, and polytetrafluoroethylene.

8. Positive electrode according to claim 7, wherein the binder is present in the positive electrode in a content ranging from 5 to 25% by weight, preferably from 10 to 15% by weight, relative to the total weight of the positive electrode excluding the current collector.

9. Method for preparing a positive electrode according to one of claims 1 to 8, wherein the method comprises:
1. placing said active material, said electronically conductive material, and optionally said binder, in contact with each other to obtain an electrode ink,
2. casting said electrode ink onto a current collector,
3. drying said electrode ink on the current collector.

10. Battery, in particular a rechargeable battery, comprising a positive electrode according to one of claims 1 to 8, a negative electrode, and a non-aqueous electrolyte.

11. Battery according to claim 10, wherein the non-aqueous electrolyte is a solution of a salt in an organic solvent,
• the salt being selected among LiPF₆, LiClO₄, and Li[N(FSO₂)₂], the salt being in particular LiPF₆,
• the organic solvent being a carbonate-based solvent, in particular diethyl carbonate, ethylene carbonate, propylene carbonate, dimethyl carbonate, or a mixture of these solvents.
